# EUROPÄISCHE PATENTSCHRIFT

(11) **EP 2 229 232 B1**
(45) Veröffentlichungstag und Bekanntmachung des Hinweises auf die Patenterteilung: **10.08.2016**
(21) Anmeldenummer: 08866023.8
(22) Anmeldetag: 17.10.2008
(51) Int. Cl.: B01D 35/16, B01D 35/30, B01D 27/10, B01D 35/153

(54) **FLÜSSIGKEITSFILTER**
FLUID FILTER
FILTRE À LIQUIDES

(30) Priorität: 21.12.2007 DE 102007062221
(43) Veröffentlichungstag der Anmeldung: 22.09.2010
(73) Patentinhaber: MAHLE International GmbH, 70376 Stuttgart (DE)
(72) Erfinder: MONZÍE, Benoît, 70499 Stuttgart (DE)
(74) Vertreter: BRP Renaud & Partner mbB Rechtsanwälte Patentanwälte Steuerberater
(86) Internationale Anmeldenummer: PCT/EP2008/064061
(87) Internationale Veröffentlichungsnummer: WO 2009/083285

(56) Entgegenhaltungen:
- EP-A- 1 419 809
- EP-A- 1 674 142
- DE-A1- 19 951 085

## Beschreibung

Die vorliegende Erfindung betrifft ein Flüssigkeitsfilter, insbesondere ein Ölfilter zum Reinigen von Schmieröl für Verbrennungsmotoren von Kraftfahrzeugen.

Flüssigkeitsfilter, insbesondere Ölfilter für Verbrennungsmotoren von Kraftfahrzeugen, besitzen üblicherweise ein sogenanntes Ringfilterelement, mittels welchem eine das Flüssigkeitsfilter durchströmende Flüssigkeit gefiltert wird. Turnusgemäß muss dieses Ringfilterelement ausgetauscht werden, um die Filterwirkung des Flüssigkeitsfilters stets gewährleisten zu können. Beim Austausch des Ringfilterelementes wird das Flüssigkeitsfilter beispielsweise durch Abnahme eines Filtergehäusedeckels geöffnet, um so einen Zugang zum Ringfilterelement schaffen zu können. Aufgrund der stetig steigenden Umweltauflagen muss dabei der Austausch des Ringfilterelementes möglich sein, ohne dass Flüssigkeit, insbesondere Öl, in die Umgebung gelangt. Aus diesem Grunde besitzen herkömmliche Flüssigkeitsfilter in ihrem Gehäuse neben einem Einlasskanal, der mit einer Rohseite des Ringfilterelementes kommuniziert und einem Auslasskanal der mit einer reinen Seiten des Ringfilterelementes kommuniziert, auch einen Leerlaufkanal, durch den ein Aufnahmeraum, in welchem das Ringfilterelement angeordnet ist, beim Öffnen des Filtergehäuses entleerbar ist. Selbstverständlich muss dieser Leerlaufkanal bei betriebsbereitem Flüssigkeitsfilter verschlossen sein, da ansonsten die Reinseite und die Rohseite des Ringfilterelementes miteinander kurzgeschlossen werden würden und dadurch das Flüssigkeitsfilter seine Filterwirkung nicht entfalten könnte.

Die vorliegende Erfindung beschäftigt sich mit dem Problem, ähnlich wie beispielsweise auch die Druckschriften DE 199 51 085 und EP 1 674 142, für einen Flüssigkeitsfilter eine verbesserte oder zumindest eine andere Ausführungsform anzugeben, welche ein automatisches Öffnen bzw. Verschließen eines Leerlaufkanales beim Aus- bzw. Einbau eines Ringfilterelementes in das Flüssigkeitsfilter ermöglicht.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zwischen einem stehend angeordneten Ringfilterelement und einem darunter angeordneten Gehäuse ein Zwischenstück vorzusehen, in welches ein Verschlusseinrichtung integriert ist. Die Verschlusseinrichtung ist dabei drehbar um die Filterachse des Ringfilterelementes ausgebildet, wobei das Ringfilterelement selbst in einem Aufnahmeraum angeordnet ist, welcher von einem Filtergehäusedeckel begrenzt ist. Gehäuseseitig sind ein Einlasskanal und ein Auslasskanal vorgesehen, wobei der Einlasskanal mit einer Rohseite des Ringfilterelementes und der Auslasskanal mit einer Reinseite des Ringfilterelementes kommuniziert. Ebenso in dem Gehäuse vorgesehen ist ein Leerlaufkanal, durch den Aufnahmeraum beim Abschrauben des Flüssigkeitsgehäusedeckels entleerbar ist, so dass keine Filterflüssigkeit, insbesondere kein Öl, in die Umgebung gelangen kann. Die drehbar um die Filterachse angeordnete Verschlusseinrichtung weist ein Verschlusselement auf, mit welchem der Leerlaufkanal bei vollständig an das Gehäuse angeschraubtem Filtergehäusedeckel verschließbar ist. Generell ist die Verschlusseinrichtung so ausgebildet, dass sie beim Anschrauben des Filtergehäusedeckels am Gehäuse in einer genau definierten Winkellage fixiert ist, in der das Verschlusselement fluchtend zum Leerlaufkanal angeordnet und durch das Anschrauben des Filtergehäusedeckels in eine den Leerlaufkanal verschließende Stellung verstellbar ist. Im Unterschied dazu wird die Verschlusseinrichtung beim Abschrauben des Filtergehäusedeckels vom Gehäuse verdreht und gleichzeitig axial vom Gehäuse weg bewegt, so dass das Verschlusselement beim Abschrauben des Filtergehäusedeckels vom Gehäuse den Leerlaufkanal freigibt und ein Leerlaufen des das Ringfilterelement beinhaltenden Aufnahmeraums ermöglicht. Durch die erfindungsgemäße Verschlusseinrichtung, welche beispielsweise als kostengünstiges Blechstanzteil mit einem Verschlusselement aus Kunststoff ausgebildet sein kann, ist es auf technisch einfachste Weise möglich, den Leerlaufkanal bei vollständig am Gehäuse angeschraubtem Filtergehäusedeckel zuverlässig zu verschließen und dadurch eine einwandfreie Funktion des Flüssigkeitsfilters zu gewährleisten, wobei bei einem Abschrauben des Filtergehäusedeckels vom Gehäuse der Leerlaufkanal automatisch geöffnet wird, so dass der Aufnahmeraum für das Ringfilterelement leer laufen kann und keine Filterflüssigkeit in die Umgebung gelangt. Ein separates Öffnen bzw. Schließen des Leerlaufkanals, verbunden mit der Möglichkeit dieses zu vergessen, kann durch das erfindungsgemäße Flüssigkeitsfilter zuverlässig ausgeschlossen werden, wodurch sich der Wartungsvorgang deutlich sicherer und zudem montagefreundlicher gestalten lässt. Durch die während des Anschraubvorgangs des Filtergehäusedeckels am Gehäuse genau fixierte Drehwinkellage der Verschlusseinrichtung kann darüber hinaus ein aufwändiges Positionieren bzw. Ausrichten des Verschlusselementes bezüglich des zu verschließenden Leerlaufkanals entfallen, wobei stets gewährleistet ist, dass der Leerlaufkanal bei vollständig am Gehäuse angeschraubten Filtergehäusedeckel zuverlässig verschlossen ist.

Zweckmäßig ist die Verschlusseinrichtung als Federteller ausgebildet und weist einen dem Gehäuse zugewandten rampenartigen Dorn auf, der beim Anschrauben des Filtergehäusedeckels in den gehäuseseitigen Einlasskanal eingreift und dadurch bezüglich seiner Drehwinkellage so fixiert ist, dass das Verschlusselement zum Leerlaufkanal fluchtet und durch ein weiteres Anschrauben des Filtergehäusedeckels in seine den Leerlaufkanal verschließende Stellung verstellbar ist. Der rampen- bzw. keilförmige Dorn gewährleistet dabei beim Anschrauben, dass sich der Dorn in einer Mündung des Einlasskanals verhakt und somit die Verschlusseinrichtung an einer weiteren Drehbewegung hindert. In der verhakten Stellung ist die Verschlusseinrichtung dabei in einer derartigen Drehwinkellage fixiert, in welcher das Verschlusselement passgenau zur Mündung des Leerlaufkanals ausgerichtet ist. Wird der Filtergehäusedeckel weiter angeschraubt, so erfolgt ausschließlich eine Axialverstellung des Verschlusselementes hin zum Leerlaufkanal, bis dieses auf einer Mündung des Leerlaufkanals aufliegt, bzw. in eine derartige Mündung eingreift und zwar so, dass der Leerlaufkanal verschlossen ist. Der rampenartige Dorn lässt sich dabei insbesondere bei einer als Blechformteil ausgebildeten Verschlusseinrichtung ebenso einfach herstellen, wie die Verschlusseinrichtung selbst.

Bei einer weiteren vorteilhaften Ausführungsform der erfindungsgemäßen Lösung ist zwischen dem Zwischenstück und dem darüber angeordneten Ringfilterelement ein scheibenartiger Boden vorgesehen, der mehrere in Umfangsrichtung verteilte Durchgangsöffnungen aufweist, wobei die Durchgangsöffnungen auf derselben radialen Umfangsbahn angeordnet sind, wie die freien Ende von in Richtung des Ringfilters abstehenden und an der Verschlusseinrichtung angeordneten Kragarmen. Die freien Enden der Tragarme sind dabei kufen- bzw. skiartig aufgebogen und ermöglichen so ein Hinweggleiten über die Durchgangsöffnungen des scheibenartigen Bodens beim Anschrauben des Filtergehäusedeckels am Gehäuse, während sich die freien Enden der Kragarme beim Abschrauben des Filtergehäusedeckels vom Gehäuse in den Durchgangsöffnungen verhaken und dadurch ein Mitdrehen der Verschlusseinrichtung erzwingen. Das Mitdrehen der Verschlusseinrichtung beim Abschrauben des Filtergehäusedeckels vom Gehäuse bewirkt ein Herausgleiten des rampenartigen Dorns aus dem Einlasskanal und damit eine Axialverstellung der Verschlusseinrichtung samt Verschlusselement, so dass das Verschlusselement die Mündung des Leerlaufkanals freigibt. Die Verschlusseinrichtung verhält sich somit beim Anschraubvorgang bzw. Abschraubvorgang des Filtergehäusedeckels am/vom Gehäuse komplett anders. Beim Anschrauben des Filtergehäusedeckels am Gehäuse wird dabei die Verschlusseinrichtung, das heißt die federnden und in Richtung des Ringfilterelementes abstehenden Kragarme gestaucht, bis das an der Verschlusseinrichtung angeordnete Verschlusselement dicht auf dem bzw. im Leerlaufkanal anliegt. Dadurch kann beim Anschrauben des Filtergehäusedeckels am Gehäuse ein zuverlässiges Verschließen des Leerlaufkanals und beim Abschrauben des Filtergehäusedeckels vom Gehäuse ein zuverlässiges Öffnen und damit Leerlauf des Aufnahmeraums bewirkt werden. Diese gewährleistet zum Einen eine hohe Funktionssicherheit des Flüssigkeitsfilters und zum anderen kann ein Austritt von Filterflüssigkeit in die Umgebung zuverlässig vermieden werden, da der Leerlaufkanal vorzugsweise bereits bei wenigen Umdrehungen des Filtergehäusedeckels vollständig geöffnet wird, so dass der Aufnahmeraum vollständig leer laufen kann, bevor der Filtergehäusedeckel abgenommen ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein erfindungsgemäßes Flüssigkeitsfilter in einer Ansicht mit einem geschnittenen Gehäuse,
- Fig. 2: eine Draufsicht auf ein Gehäuse des Flüssigkeitsfilters,
- Fig. 3: ein Filtergehäusedeckel mit daran montiertem Zwischenstück,
- Fig. 4: eine Explosionsdarstellung nach Fig. 3,
- Fig. 5: eine Explosionsdarstellung des Zwischenstücks mit darin integrierter Verschlusseinrichtung und scheibenartigem Boden,
- Fig. 6: eine Ansicht auf die Verschlusseinrichtung mit Verschlusselement,
- Fig. 7: eine Prinzipskizze zur Verdeutlichung der Arbeitsweise der Verschlusseinrichtung.

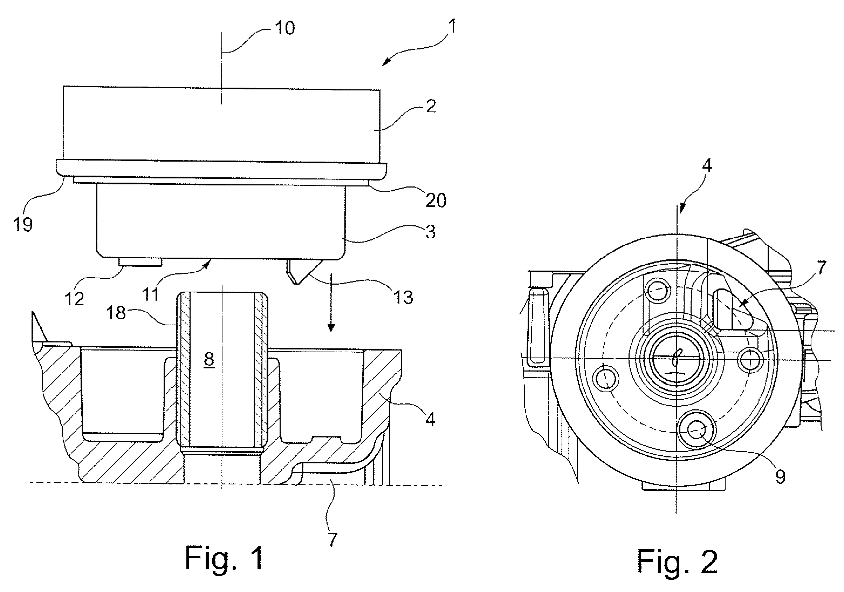

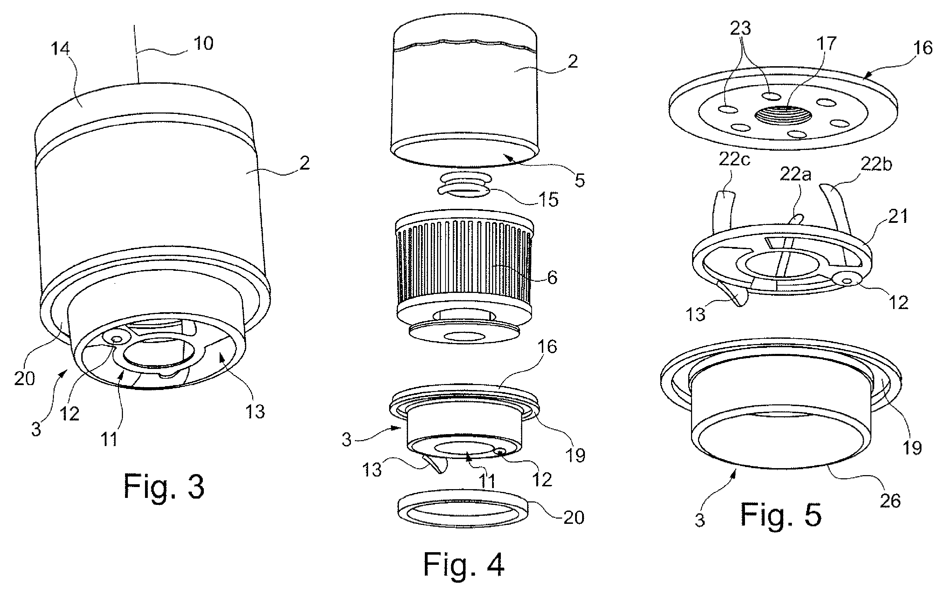

Entsprechend der Fig. 1 weist ein erfindungsgemäßes Flüssigkeitsfilter 1 einen lediglich teilweise darstellten Filtergehäusedeckel 2 mit einem darunter angeordneten Zwischenstück 3 auf. Ebenso zum Flüssigkeitsfilter 1 gehört ein Gehäuse 4, welches gemäß der Fig. 1 geschnitten dargestellt ist und welches über eine Schraubverbindung 18 mit der aus Filtergehäusedeckel 2 und Zwischenstück 3 gebildeten Einheit verschraubbar ist. Der Filtergehäusedeckel 2 begrenzt einen gemäß Fig. 4 dargestellten Aufnahmeraum 5 für ein Ringfilterelement 6. Wie der Fig. 1 weiter zu entnehmen ist, ist dabei das Zwischenstück 3 zwischen dem Filtergehäusedeckel 2 und dem Gehäuse 4 angeordnet, wobei im Aufnahmeraum 5, wie dies beispielsweise in Fig. 4 gezeigt ist, das Ringfilterelement 6 stehend angeordnet ist.

Um eine Ver- bzw. Entsorgung des Flüssigkeitsfilters 1 mit Filterflüssigkeit zu gewährleisten, sind im Gehäuse 4 zumindest ein Einlasskanal 7 und ein Auslasskanal 8 vorgesehen. Der gehäuseseitige Einlasskanal 7 kommuniziert dabei mit einer Rohseite des Ringfilterelementes 6, während der gehäuseseitige Auslasskanal 8 mit einer Reinseite des Ringfilterelementes 6 kommunizierend verbunden ist.

Um bei einem Wechseln des Ringfilterelementes 6 - wozu der Filtergehäusedeckel 2 abgeschraubt werden muss - einen Austritt von Filterflüssigkeit in die Umgebung verhindern zu können, ist im Gehäuse 4 zusätzlich ein Leerlaufkanal 9 vorgesehen (vgl. Fig. 2), welcher den Aufnahmeraum 5 mit einem Flüssigkeitsreservoir, verbindet und dadurch ein Entleeren des Aufnahmeraums 5 vorzugsweise noch vor dem kompletten Abschrauben des Filtergehäusedeckels 2 ermöglicht. Dieser Leerlaufkanal 9 muss bei betriebsbereitem Flüssigkeitsfilter 1 selbstverständlich verschlossen sein, da ansonsten ein Kurzschluss zwischen Rein- und Rohseite und damit eine Beeinträchtigung der Funktionsweise des Flüssigkeitsfilters 1 erfolgen würde. Um den Leerlaufkanal 9 während des Betriebs des Flüssigkeitsfilters 1 zu verschließen, beim Austauschen des Ringfilterelementes 6 jedoch zuverlässig öffnen zu können, ist im Zwischenstück 3 eine drehbar um die Filterachse 10 angeordnete Verschlusseinrichtung 11 vorgesehen, die ein Verschlusselement 12 aufweist, mit welchem der Leerlaufkanal 9 bei vollständig montiertem Flüssigkeitsfilter 1 verschließbar ist.

Um den Leerlaufkanal 9 einerseits zuverlässig bei betriebsbereitem Flüssigkeitsfilter 1 verschließen zu können und andererseits beim Abschrauben des Filtergehäusedeckels 2 frühzeitig öffnen zu können und damit ein Leerlaufen des Aufnahmeraumes 5 zu ermöglichen, ist die Verschlusseinrichtung 11 so ausgebildet, dass sie beim Anschrauben des Filtergehäusedeckels 2 am Gehäuse 4 in einer genau definierten Drehwinkellage fixiert ist, in welcher das Verschlusselement 12 fluchtend zum Leerlaufkanal 9 angeordnet und durch das Anschrauben des Filtergehäusedeckels 2 in eine den Leerlaufkanal 9 verschließende Stellung verstellbar ist. Beim Abschrauben des Filtergehäusedeckels 2 vom Gehäuse 4 hingegen wird die Verschlusseinrichtung 11 verdreht und gleichzeitig axial vom Gehäuse 4 wegbewegt, so dass das Verschlusselement 12 bereits frühzeitig den Leerlaufkanal 9 freigibt und ein Leerlaufen des Aufnahmeraums 5 ermöglicht, so dass keine Filterflüssigkeit ungewollt in die Umgebung gelangen kann. Die Fixierung der Verschlusseinrichtung 11 in der vordefinierten Drehwinkellage beim Anschrauben des Filtergehäusedeckels 2 am Gehäuse 4 wird dabei von einem in Richtung des Gehäuses 4 axial abstehenden, rampenartigen Dorn 13 bewirkt, welcher beim Anschrauben des Filtergehäusedeckels 2 am Gehäuse 4 in den Einlasskanal 7 eingreift und dadurch die Verschlusseinrichtung 11 an einem Verdrehen hindert.

Gemäß der Fig. 4 ist die aus Filtergehäusedeckel 2 und Zwischenstück 3 bestehende Einheit innerlich wie folgt aufgebaut:
Der Filtergehäusedeckel 2 begrenzt den Aufnahmeraum 5, in welchem das Ringfilterelement 6 angeordnet ist. Bezüglich einer Stirnwand 14 des Filtergehäusedeckels 2 ist das Ringfilterelement 6 über eine Feder 15 federnd abgestützt. Zwischen dem Ringfilterelement 6 und dem Zwischenstück 3 ist ein scheibenartiger Boden 16 (vgl. Fig. 4, 5 und 7) vorgesehen, welcher beispielsweise ein zentrales Innengewinde 17 aufweisen kann, über welches er mit dem komplementär dazu am Auslasskanal 8 ausgebildeten Außengewinde 18 verschraubbar ist. Innerhalb des Zwischenstücks 3 ist die drehbar gelagerte Verschlusseinrichtung 11 angeordnet, wobei zusätzlich am Zwischenstück 3 eine in Axialrichtung offene Umfangsnut 19 vorgesehen ist, in welcher ein Dichtelement 20 angeordnet ist, welches das Zwischenstück 3 gegenüber dem Gehäuse 4 abdichtet.

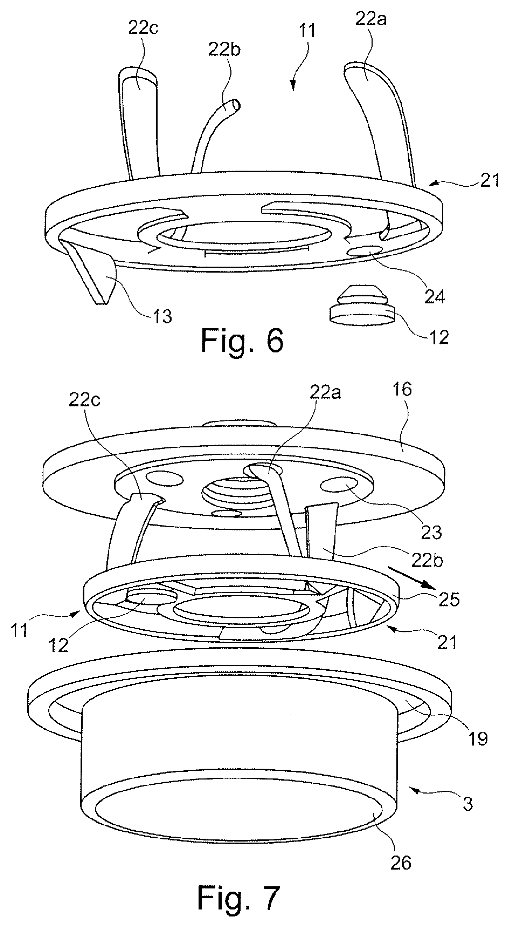

Die Verschlusseinrichtung 11 selbst besteht im wesentlichen aus einem Federteller 21, der in Richtung des Gehäuses 4 axial abstehend den rampenartigen Dorn 13 und in Richtung des Ringfilterelementes 6 abstehende zumindest drei federnde und auf einer gemeinsame Umfangsbahn angeordnete Kragarme 22a, 22b und 22c aufweist. Die in Richtung des Ringfilterelements 6 abstehenden Kragarme 22a, 22b und 22c sind dabei zur Filterachse 10 geneigt, insbesondere in Umfangsrichtung geneigt ausgebildet, wobei deren freien Enden vorzugsweise kufenartig abgewinkelt ausgebildet sind (vgl. insbesondere Fig. 6). Der zwischen dem Zwischenstück 3 und dem Ringfilterelement 6 angeordnete scheibenartige Boden 16 weist mehrere in Umfangsrichtung auf einer Umfangsbahn verteilte Durchgangsöffnungen 23 auf, welche auf derselben radialen Umfangsbahn angeordnet sind, wie die freien Enden der Kragarme 22a, 22b und 22c.

Beim Anschrauben des Filtergehäusedeckels 2 am Gehäuse 4 erfolgt wie bereits vorher erwähnt ein Eingreifen des Dorns 13 in den Einlasskanal 7 und dadurch eine Drehwinkelfixierung der Verschlusseinrichtung 11. Durch die kufenartig abgebogenen freien Enden der Kragarme 22a, 22b und 22c gleiten diese beim Anschrauben über die Durchgangsöffnungen 23 hinweg, ohne sich mit diesen zu Verhaken. Beim Aufschrauben des Filtergehäusedeckels 2 auf das Gehäuse 4 wird die Verschlusseinrichtung 11 axial gestaucht, das heißt die Kragarme 22a, 22b und 22c werden federnd in Richtung des Federtellers 21 gebogen, wobei in jeder Schraubstellung des Filtergehäusedeckels 2 die Kragarme 22a, 22b und 22c am scheibenartigen Boden 16 und der rampenartige Dorn 13 am Gehäuse 4 anliegen. Beim Abschrauben des Filtergehäusedeckels 2 vom Gehäuse 4 hingegen verhaken sich die freien Enden der Kragarme 22a, 22b und 22c in den Durchgangsöffnungen 23 des Bodens 16 und erzwingen dadurch ein Verdrehen der Verschlusseinrichtung 11. Dieses Verdrehen der Verschlusseinrichtung 11 bewirkt, dass der rampenartige Dorn aus dem Einlasskanal 7 herausbewegt und damit die Verschlusseinrichtung 11 samt Verschlusselement 12 axial in Richtung des Ringfilterelementes 6 verstellt wird. Diese Axialverstellung bewirkt ein sich Wegbewegen des Verschlusselementes 12 vom bzw. aus dem Leerlaufkanal 9, woraufhin dieser geöffnet wird und der Aufnahmeraum 5 über den Leerlaufkanal 9 entleert werden kann. Das Schraubgewinde zwischen Filtergehäusedeckel 2 bzw. Boden 16 und Gehäuse 4 weist dabei so viele Gewindegänge auf, dass bei einem normalen Abschraubvorgang ein Abheben des Filtergehäusedeckels 2 erst zu einem Zeitpunkt erfolgt, zu dem der Aufnahmeraum 5 mit Sicherheit bereits über den Leerlaufkanal 9 entleert ist und dadurch ein ungewolltes Austreten von Filterflüssigkeit in die Umgebung zuverlässig verhindert werden kann.

Der Federteller 21 kann dabei beispielsweise aus Metall oder aus Kunststoff, insbesondere als Blechformteil ausgebildet sein, während das Verschlusselement 12 vorzugsweise aus schmierölbeständigem Kunststoff ausgebildet ist.

Wie insbesondere der Fig. 6 zu entnehmen ist, ist die Neigung der Kragarme 22a, 22b und 22c entgegengesetzt zur Steigung des rampenartigen Dorns 13 ausgebildet, wodurch sich bei einem Verdrehen der Verschlusseinrichtung 11 diese in einer Verdrehrichtung über den Dorn in dem Einlasskanal 7 verhakt, während sie sich in der entgegengesetzten Verdrehrichtung über die freien Enden der Kragarme 22a, 22b und 22c in den Durchgangsöffnungen 23 verhaken.

Das Verschlusselement 12 ist vorzugsweise als Dichtpilz ausgebildet, wie dies ebenfalls aus Fig. 6 ersichtlich ist, und mit seinem Fuß in einer entsprechenden Axialöffnung 24 des Federtellers 21 eingesteckt und dadurch in bzw. an diesem fixiert. Die Verschlusseinrichtung 11 weist einen Führungsrand 25 auf, welcher in einem abgewinkelten, insbesondere nach innen gezogenen, Rand 26 des Zwischenstücks 3 geführt ist.

Durch die erfindungsgemäße Verschlusseinrichtung 11 ist es somit möglich, den Leerlaufkanal 9 bei vollständigem montiertem Flüssigkeitsfilter 1 zuverlässig zu verschließen, beim Austausch des Ringfilterelementes 6 diesen jedoch bereits bei einem Beginn des Abschraubvorgangs des Filtergehäusedeckels 2 vom Gehäuse 4 zu öffnen und dadurch vorzugsweise ein vollständiges Entleeren des Aufnahmeraums 5 zu gewährleisten, bevor eine Abnahme des Filtergehäusedeckels 2 möglich ist. Die Verschlusseinrichtung 11 ist dabei konstruktiv äußerst einfach ausgebildet und daher kostengünstig herzustellen.

## Patentansprüche

1. Flüssigkeitsfilter (1), insbesondere ein Ölfilter zum Reinigen von Schmieröl für Verbrennungsmotoren von Kraftfahrzeugen,
- mit einem, einen Aufnahmeraum (5) begrenzenden Filtergehäusedeckel (2), in dem ein Ringfilterelement (6) angeordnet ist,
- mit wenigstens einem Zwischenstück (3), welches bei an einem Gehäuse (4) angeschraubtem Filtergehäusedeckel (2) unterhalb des Filtergehäusedeckels (2) und oberhalb des Gehäuses (4) angeordnet ist,
- mit einem gehäuseseitigen Einlasskanal (7), der mit einer Rohseite des Ringfilterelementes (6) kommuniziert und einem gehäuseseitigen Auslasskanal (8), der mit einer Reinseite des Ringfilterelementes (6) kommuniziert,
- mit einem gehäuseseitigen Leerlaufkanal (9), durch den der Aufnahmeraum (5) beim Entfernen des Filtergehäusedeckels (2) entleerbar ist,
- mit einer in dem Zwischenstück (3) drehbar um die Filterachse (10) angeordneten Verschlusseinrichtung (11), die ein Verschlusselement (12) aufweist, mit welchem der Leerlaufkanal (9) verschließbar ist,
- wobei die Verschlusseinrichtung (11) so ausgebildet ist, dass sie beim Anschrauben des Filtergehäusedeckels (2) am Gehäuse (4) in einer genau definierten Drehwinkellage fixiert ist, in welcher das Verschlusselement (12) fluchtend zum Leerlaufkanal (9) angeordnet und durch das Anschrauben des Filtergehäusedeckels (2) in eine den Leerlaufkanal (9) verschließende Stellung verstellbar ist, während die Verschlusseinrichtung (11) beim Abschrauben des Filtergehäusedeckels (2) verdreht und gleichzeitig axial von dem Gehäuse (4) wegbewegt wird, so dass das Verschlusselement (12) den Leerlaufkanal (9) freigibt,
**dadurch gekennzeichnet,**
**dass** die Verschlusseinrichtung (11) als Federteller (21) ausgebildet ist, welcher in Richtung des Gehäuses (4) axial abstehend einen rampenartigen Dorn (13) aufweist und welcher in Richtung des Ringfilterelements (6) abstehend zumindest drei federnde und auf einer Umfangsbahn angeordnete Kragarme (22a, 22b, 22c) aufweist.

2. Flüssigkeitsfilter nach Anspruch 1,
**dadurch gekennzeichnet,**
**dass** der Federteller (21) beim Anschrauben des Filtergehäusedeckels (2) am Gehäuse (4) mit seinem rampenartigen Dorn (13) in den gehäuseseitigen Einlasskanal (7) eingreift und dadurch bezüglich seiner Drehwinkellage so fixiert ist, dass das Verschlusselement (12) zum Leerlaufkanal (9) fluchtet und durch ein weiteres Anschrauben des Filtergehäusedeckels (2) in seine den Leerlaufkanal (9) verschließende Stellung verstellbar ist.

3. Flüssigkeitsfilter nach Anspruch 1 oder 2,
**dadurch gekennzeichnet,**
**dass** die in Richtung des Ringfilterelements (6) abstehenden Kragarme (22a, 22b, 22c) geneigt zur Filterachse (10) ausgebildet sind, wobei deren freies Ende kufenartig aufgebogen ist.

4. Flüssigkeitsfilter nach Anspruch 3,
**dadurch gekennzeichnet,**
- **dass** zwischen dem Zwischenstück (3) und dem Ringfilterelement (6) ein scheibenartiger Boden (16) vorgesehen ist, welcher mehrere in Umfangsrichtung verteilte Durchgangsöffnungen (23) aufweist, die auf derselben Umfangsbahn angeordnet sind wie die freien Enden der Kragarme (22a, 22b, 22c),
- **dass** die kufenartig aufgebogenen freien Enden der Kragarme (22a, 22b, 22c) beim Anschrauben des Filtergehäusedeckels (2) am Gehäuse (4) über die Durchgangsöffnungen (23) hinweggleiten, während sie sich beim Abschrauben des Filtergehäusedeckels (2) vom Gehäuse (4) in den Durchgangsöffnungen (23) verhaken und dadurch ein Mitdrehen der Verschlusseinrichtung (11) bewirken,
- wobei die Drehbewegung der Verschlusseinrichtung (11) durch ein Herausgleiten des rampenartigen Dorns (13) aus dem Einlasskanal (7) eine Axialverstellung der Verschlusseinrichtung (11) und damit ein Öffnen des Leerlaufkanals (9) bewirkt.

5. Flüssigkeitsfilter nach Anspruch 4,
**dadurch gekennzeichnet,**
**dass** die Kragarme (22a, 22b, 22c) beim Anschrauben des Filtergehäusedeckels (2) am Gehäuse (4) eine federnde Axialstauchung der Verschlusseinrichtung (11) erlauben, wobei in
jeder Schraubstellung des Filtergehäusedeckels (2) die Kragarme (22a, 22b, 22c) am scheibenartigen Boden (16) und der rampenartige Dorn (13) am Gehäuse (4) anliegen.

6. Flüssigkeitsfilter nach einem der Ansprüche 1 bis 5, **dadurch gekennzeichnet,**
- **dass** der Federteller (21) aus Metall oder aus Kunststoff, insbesondere aus Blech ausgebildet ist, und/oder
- **dass** das Verschlusselement (12) aus schmierölbeständigem Kunststoff ausgebildet ist.

7. Flüssigkeitsfilter nach einem der Ansprüche 3 bis 6, **dadurch gekennzeichnet,**
**dass** die Neigung der Kragarme (22a, 22b, 22c) entgegengesetzt zur Steigung des rampenartigen Dorns (13) ausgebildet ist.

8. Flüssigkeitsfilter nach einem der Ansprüche 1 bis 7, **dadurch gekennzeichnet,**
**dass** das Verschlusselement (12) als Dichtpilz ausgebildet ist, welcher mit seinem Fuß in einer entsprechenden Axialöffnung (24) des Federtellers (21) eingesteckt und dadurch an diesem fixiert ist.

9. Flüssigkeitsfilter nach einem der Ansprüche 1 bis 8, **dadurch gekennzeichnet,**
**dass** am Zwischenstück (3) ein in Axialrichtung offene Umfangsnut (19) vorgesehen ist, in welcher ein Dichtelement (20) angeordnet ist, welches das Zwischenstück (3) gegenüber dem Gehäuse (4) abdichtet.

## Claims

1. Liquid filter (1), in particular an oil filter for cleaning lubricating oil for the combustion engines of motor vehicles, comprising:
- a filter housing cover (2) delimiting a housing space (5), in which filter housing cover a ring filter element (6) is arranged,
- at least one intermediate piece (3) which is arranged below the filter housing cover (2) and above the housing (4), when the filter housing cover (2) is screwed onto a housing (4),
- an inlet channel (7) arranged on the housing side, wherein the inlet channel communicates with a dirty side of the ring filter element (6), and an outlet channel (8) arranged on the housing side, wherein the outlet channel communicates with a clean side of the ring filter element (6),
- a drainage channel (9) on the housing side, through which the housing space (5) can be emptied on removing the filter housing cover (2),
- a closure mechanism (11) arranged in the intermediate piece (3) to be rotatable about the filter axis (10), which closure mechanism has a closure element (12) for closing the drainage channel (9),
- wherein the closure mechanism (11) is configured such that when the filter housing cover (2) is screwed onto the housing (4) it is fixed in a precisely defined rotational angle position in which the closure element (12) is arranged in alignment with the drainage channel (9) and can be adjusted by screwing the filter housing cover (2) into a position closing the drainage channel (9), whilst on unscrewing the filter housing cover (2) the closure mechanism (11) rotates and at the same time is moved axially away from the housing (4) so that the closure element (12) releases the drainage channel (9), **characterised in that** the closure mechanism (11) is configured as a spring plate (21), which comprises a ramp-like mandrel (13), which projects axially in the direction of the housing (4), and comprises at least three flexible cantilever arms (22a, 22b, 22c), which project in the direction of the ring filter element (6) and are arranged on a circumferential path.

2. Liquid filter according to claim 1, **characterised in that** on screwing the filter housing (2) onto the housing (4) the spring plate (21) engages with its ramp-like mandrel (13) into the inlet channel (7) on the housing side and is fixed thereby with respect to its rotary angle position so that the closure element (12) is aligned with the drainage channel (9) and by further screwing on the filter housing cover (2) can be adjusted into its position closing the drainage channel (9).

3. Liquid filter according to claim 1 or 2, **characterised in that** the cantilever arms (22a, 22b, 22c) projecting in the direction of the ring filter element (6) are designed to be inclined relative to the filter axis (10), wherein their free end is bent up like a skid.

4. Liquid filter according to claim 3, **characterised in that**
- between the intermediate piece (3) and the ring filter element (6) a disk-like base (16) is provided which comprises a plurality of through-openings (23) distributed in circumferential direction which are arranged on the same circumferential path as the free ends of the cantilever arms (22a, 22b, 22c),
- **in that** when screwing the filter housing cover (2) onto the housing (4) the skid-like bent free ends of the cantilever arms (22a, 22b, 22c) slide across the through-openings (23), whereas when unscrewing the filter housing cover (2) from the housing (4) they hook into the through-openings (23), thereby causing a co-rotation of the closure mechanism (11),
- wherein the rotational movement of the closure mechanism (11) with the sliding of the ramp-like mandrel (13) out of the inlet channel (7) causes an axial adjustment of the closure mechanism (11) and thus an opening of the drainage channel (9).

5. Liquid filter according to claim 4, **characterised in that** when screwing the filter housing cover (2) onto the housing (4) the cantilever arms (22a, 22b, 22c) allow an elastic axial compression of the closure mechanism (11), wherein in each screwing position of the filter housing cover (2) the cantilever arms (22a, 22b, 22c) bear on the disk-like base (16) and the ramp-like mandrel (13) bears on the housing (4).

6. Liquid filter according to any one of claims 1 to 5, **characterised in that**
- the spring plate (21) is made of metal or plastic, in particular sheet metal, and/or
- the closure mechanism (12) is made from a lubricating oil-resistant plastic.

7. Liquid filter according to any one of claims 3 to 6, **characterised in that** the inclination of the cantilever arms (22a, 22b, 22c) is contrary to the inclination of the ramp-like mandrel (13).

8. Liquid filter according to any one of claims 1 to 7, **characterised in that** the closure element (12) is designed as a sealing mushroom, which is inserted with its foot in a corresponding axial opening (24) of the spring plate (21) and is fixed onto the latter in this way.

9. Liquid filter according to any one of claims 1 to 8, **characterised in that** a circumferential groove (19) which is open in an axial direction is provided on the intermediate piece (3), in which groove a sealing element (20) is arranged which seals the intermediate piece (3) from the housing (4).

## Revendications

1. Filtre de liquide (1), notamment filtre à huile pour la purification d'une huile de graissage pour des moteurs à combustion de véhicules automobiles,
- avec un couvercle de corps de filtre (2) qui délimite un espace de logement (5) et dans lequel un élément de filtre annulaire (6) est agencé,
- avec au moins une pièce intermédiaire (3) qui, lorsque le couvercle de corps de filtre (2) est vissé sur un corps (4), est agencée au-dessous du couvercle de corps de filtre (2) et au-dessus du corps (4),
- avec un canal d'entrée (7) côté corps qui communique avec un côté brut de l'élément de filtre annulaire (6) et avec un canal de sortie (8) côté corps qui communique avec un côté pur de l'élément de filtre annulaire (6),
- avec un canal de vidange (9) côté corps par lequel l'espace de logement (5) peut être vidé lorsque le couvercle de corps de filtre (2) est enlevé,
- avec un dispositif de fermeture (11) qui est agencé dans la pièce intermédiaire (3) de manière à pouvoir tourner autour de l'axe de filtre (10) et qui comporte un élément de fermeture (12) avec lequel le canal de vidange (9) peut être fermé,
- le dispositif de fermeture (11) étant conçu de telle sorte que, lorsque le couvercle de corps de filtre (2) est vissé sur le corps (4), il est fixé dans une position angulaire exactement définie dans laquelle l'élément de fermeture (12) est agencé dans l'alignement du canal de vidange (9) et peut être déplacé, par le vissage du couvercle de corps de filtre (2), dans une position fermant le canal de vidange (9), tandis que le dispositif de fermeture (11), lorsque le couvercle de corps de filtre (2) est dévissé, est tourné et simultanément éloigné axialement du corps (4) de telle sorte que l'élément de fermeture (12) libère le canal de vidange (9),
**caractérisé en ce que** le dispositif de fermeture (11) est conçu comme une coupelle (21) qui comporte un éperon (13), à la manière d'une rampe, s'écartant axialement en direction du corps (4) et qui comporte au moins trois bras en porte à faux (22a, 22b, 22c), faisant ressort et agencés sur une trajectoire circonférentielle, s'écartant en direction de l'élément de filtre annulaire (6).

2. Filtre de liquide selon la revendication 1, **caractérisé en ce que**, lorsque le couvercle de corps de filtre (2) est vissé sur le corps (4), la coupelle (21) vient en prise avec son éperon en rampe (13) dans le canal d'entrée (7) côté corps et est ainsi fixée quant à sa position angulaire de telle sorte que l'élément de fermeture (12) est aligné avec le canal de vidange (9) et, par un nouveau vissage du couvercle de corps de filtre (2), peut être déplacé dans sa position fermant le canal de vidange (9).

3. Filtre de liquide selon la revendication 1 ou 2, **caractérisé en ce que** les bras en porte à faux (22a, 22b, 22c) s'écartant en direction de l'élément de filtre annulaire (6) sont conçus inclinés par rapport à l'axe de filtre (10), leur extrémité libre étant pliée en forme de patin.

4. Filtre de liquide selon la revendication 3, **caractérisé en ce que**
- il est prévu entre la pièce intermédiaire (3) et l'élément de filtre annulaire (6) un fond (16) en forme de disque qui comporte plusieurs ouvertures de passage (23) qui sont réparties en direction circonférentielle et qui sont agencées sur la même trajectoire circonférentielle que les extrémités libres des bras en porte à faux (22a, 22b, 22c),
- lorsque le couvercle de corps de filtre (2) est vissé sur le corps (4), les extrémités libres pliées en forme de patins des bras en porte à faux (22a, 22b, 22c) passent au-dessus des ouvertures de passage (23) tandis que, lorsque le couvercle de corps de filtre (2) est dévissé du corps (4), elles s'accrochent dans les ouvertures de passage (23) et provoquent ainsi une rotation simultanée du dispositif de fermeture (11),
- le mouvement de rotation du dispositif de fermeture (11) provoquant, par un glissement de l'éperon en rampe (13) hors du cana d'entrée (7), un déplacement axial du dispositif de fermeture (11) et donc une ouverture du canal de vidange (9).

5. Filtre de liquide selon la revendication 4, **caractérisé en ce que**, lorsque le couvercle de corps de filtre (2) est vissé sur le corps (4), les bras en porte à faux (22a, 22b, 22c) permettent un aplatissement axial élastique du dispositif de fermeture (11), de sorte que, dans toute position vissée du couvercle de corps de filtre (2), les bras en porte à faux (22a, 22b, 22c) s'appuient contre le fond (16) en forme de disque et l'éperon en rampe (13) s'appuie contre le corps (4).

6. Filtre de liquide selon l'une des revendications 1 à 5, **caractérisé en ce que**
- la coupelle (21) est conçue en métal ou en plastique, notamment en tôle, et/ou
- l'élément de fermeture (12) est conçu en un plastique résistant à l'huile de graissage.

7. Filtre de liquide selon l'une des revendications 3 à 6, **caractérisé en ce que** l'inclinaison des bras en porte à faux (22a, 22b, 22c) est conçue de sens contraire par rapport à la pente de l'éperon en rampe (13).

8. Filtre de liquide selon l'une des revendications 1 à 7, **caractérisé en ce que** l'élément de fermeture (12) est conçu comme un joint en champignon qui est enfoncé avec son pied dans une ouverture axiale correspondante (24) de la coupelle (21) et qui est ainsi fixé à celle-ci.

9. Filtre de liquide selon l'une des revendications 1 à 8, **caractérisé en ce qu'**il est prévu sur la pièce intermédiaire (3) une rainure circonférentielle (19) ouverte en direction axiale dans laquelle est agencé un élément d'étanchéité (20) qui assure l'étanchéité de la pièce intermédiaire (3) par rapport au corps (4).
